# EUROPEAN PATENT APPLICATION

(11) **EP 2 395 448 A2**
(43) Date of publication of application: **14.12.2011**
(21) Application number: 11165640.1
(22) Date of filing: 11.05.2011
(51) Int. Cl.: G06F 21/00

(54) **Mobile communication terminal, data processing method for mobile communication terminal and settlement terminal**

(30) Priority: 11.06.2010 CN 201010197584; 11.01.2011 US 4408
(71) Applicant: Sony Ericsson Mobile Communications AB, 221 88 Lund (SE)
(72) Inventor: Cai, Wenbo, 100102, Beijing (CN); Ye, Bizhong, 100102, Beijing (CN)
(74) Representative: VALEA AB

(57) **Abstract**

The present invention relates to a mobile communication terminal, a data processing method for mobile communication terminal and a settlement terminal, wherein the mobile communication terminal includes: a first receiving unit configured to receive an electronic coupon under digital copyright protection from an external device and store it into a memory unit of the mobile communication terminal; a second receiving unit same as or different from the first receiving unit, and configured to receive a digital copyright file corresponding to the electronic coupon from a digital copyright issuing server, and store it into the memory unit; a display unit configured to display preferential information of the electronic coupon and/or a digital copyright permission corresponding to the digital copyright file; and a Digital Rights Management (DRM) agent configured to provide preferential identification information of the electronic coupon to a settlement terminal based on the digital copyright permission, for recognition by the settlement terminal.

## Description

### Field of the Invention

The present invention relates to the field of data processing technique, and more particularly, to a mobile communication terminal processing data used as electronic coupons, a data processing method for the mobile communication terminal, and a settlement terminal.

### Description of the Related Art

Presently, issuing coupons is an effective marketing policy adopted by merchants to promote the sales of their products. For example, a fast food restaurant such as a KFC restaurant or McDonald's restaurant issues various coupons to the customers from time to time. Usually, issuing coupons includes directly issuing paper coupons and providing electronic coupons on the website for a download by the customers. An electronic coupon downloaded from the website finally needs to be printed on a printer and converted into a paper coupon so as to be used. Thus, customers finally carry paper coupons to the counter. When the customer buys a commodity using a paper coupon, the clerk will carry out corresponding discount for the commodity bought by the customer according to the paper coupon, and at the same time, takes back the paper coupon. Such paper coupon cannot be used repeatedly and is easy to be lost by the user. When the user wants to use the coupon again, he would have to download and print an electronic coupon again from the website. In addition, if the user wants to buy multiple preferential commodities, he needs to print multiple coupons. These bring great inconvenience to users.

Another form of the coupon is a long-term valid discount card, e.g., paper or smart card. Although such card can be used repeatedly, each card is usually corresponding to one merchant, e.g., the discount card of one merchant is only suitable for the commodities of that merchant, and if a user wants to enjoy the preferences of different merchants through a discount card, he would have different discount cards, which is inconvenient for carrying by the user, and the user will easily confuse or forget concrete or specific preferential information and validity information in the cards, e.g., user names and/or passwords. In addition, such discount card is also easy to lose.

Chinese patent application No. 01803917.0 (publication number CN1395709A) discloses a method of receiving, storing and processing electronic coupons by using a mobile device, e.g., mobile phone or PDA, wherein the mobile device includes an apparatus for exchanging data with a payment terminal during a purchase operation, based on electronic coupon offers corresponding to discounts. At least one electronic coupon is received and stored in a memory of the mobile device, the codes of the purchased commodity are read at the payment terminal, and the list of coupons stored in the mobile device is transmitted to the payment terminal. Alternatively, the list of purchased commodities, read off at the payment terminal, is transmitted to the mobile device, the list of coupons is compared with the list of purchased commodities, and if one or more commodities are recognized that there is one or more coupons for the commodity or commodities, the amount of the discount or discounts corresponding to the coupons is automatically deducted from the total amount of the purchases. The solution disclosed in that patent application is difficult to limit the coupon permission (e.g., usage duration or usage times) and the user group, thus the coupons can be easily and quickly spread between mobile devices, and can be used for any number of times by the users. As a result, the coupons may be used excessively, and relatively large losses may be caused to the merchants.

### Summary of the Invention

The present invention is proposed with respect to the above problems in the prior art.

Aspects of the present invention relate to a mobile communication terminal that conveniently uses electronic coupons, a data processing method for the mobile communication terminal, and a settlement terminal, so as to overcome one or more problems that existed due to the limitation of the prior art, and provide a beneficial choice.

According to one aspect of the present invention, a mobile communication terminal includes a first receiving unit configured to receive an electronic coupon under digital copyright protection from an external device and store the electronic coupon into a memory unit of the mobile communication terminal; a second receiving unit same as or different from the first receiving unit, and configured to receive a digital copyright file corresponding to the electronic coupon from a digital copyright issuing server, and store the digital copyright file into the memory unit; a display unit configured to display preferential information of the electronic coupon and/or a digital copyright permission corresponding to the digital copyright file; and a Digital Rights Management (DRM) agent configured to provide preferential identification information of the electronic coupon to a settlement terminal based on the digital copyright permission, for recognition by the settlement terminal.

According another aspect of the present invention, the DRM agent is further configured to transmit user identification information of the mobile communication terminal to the settlement terminal and/or the digital copyright issuing server.

According another aspect of the present invention, the user identification information is the number or the user name of the mobile communication terminal.

According another aspect of the present invention, the DRM agent transmits data including the preferential identification information and the user identification information to the settlement terminal based on the digital copyright permission through a short-range communication unit.

According another aspect of the present invention, the preferential identification information of the electronic coupon provided by the DRM agent to the settlement terminal is a bar code.

According another aspect of the present invention, a data processing method for mobile communication terminal includes receiving and storing an electronic coupon that is under digital copyright protection and from an external device; receiving and storing a digital copyright file that is corresponding to the electronic coupon and from a digital copyright issuing server; displaying preferential information of the electronic coupon and/or a digital copyright permission corresponding to the digital copyright file; and providing preferential identification information of the electronic coupon to a settlement terminal based on the digital copyright permission, for recognition by the settlement terminal.

According another aspect of the present invention, the method further includes: transmitting user identification information of the mobile communication terminal to the settlement terminal and/or the digital copyright issuing server.

According another aspect of the present invention, the user identification information is the number or the user name of the mobile communication terminal.

According another aspect of the present invention, providing the preferential identification information of the electronic coupon to the settlement terminal includes: transmitting the preferential identification information to the settlement terminal through a short-range communication unit; and transmitting the user identification information of the mobile communication terminal to the settlement terminal includes: transmitting the user identification information to the settlement terminal through the short-range communication unit.

According another aspect of the present invention, the preferential identification information of the electronic coupon provided to the settlement terminal is a bar code.

According another aspect of the present invention, a mobile communication terminal includes a first receiving unit configured to receive an electronic coupon at least including preferential information of commodity and a bar code corresponding thereto from an external device and store the electronic coupon into a memory unit of the mobile communication terminal; and a display unit configured to display the preferential information of the electronic coupon and the bar code, for scan and recognition by the settlement terminal.

According another aspect of the present invention, the mobile communication terminal further includes: a second receiving unit same as or different from the first receiving unit, and configured to receive a digital copyright file corresponding to the electronic coupon from a digital copyright issuing server, and store the digital copyright file into the memory unit; and a DRM agent configured to control the display unit to display the bar code based on a digital copyright permission of the electronic coupon, for scan and recognition by the settlement terminal.

According another aspect of the present invention, the display unit is further configured to display the digital copyright permission provided by the digital copyright file.

According another aspect of the present invention, the DRM agent is further configured to transmit user identification information of the mobile communication terminal to the settlement terminal and/or the digital copyright issuing server after the display unit displays the bar code for a predetermined time.

According another aspect of the present invention, the user identification information is the number or the user name of the mobile communication terminal.

According another aspect of the present invention, a data processing method for mobile communication terminal includes receiving and storing an electronic coupon at least including preferential information of commodity and a bar code corresponding thereto from an external device; and displaying the preferential information of the electronic coupon, and displaying the bar code for scan and recognition by a settlement terminal.

According another aspect of the present invention, the method further includes: receiving and storing a digital copyright file that is corresponding to the electronic coupon and from a digital copyright issuing server; wherein, displaying the bar code for scan and recognition by the settlement terminal includes displaying the bar code based on the digital copyright permission, for scan by the settlement terminal.

According another aspect of the present invention, the method further includes: displaying the digital copyright permission provided by the digital copyright file.

According another aspect of the present invention, the method further includes: transmitting user identification information of the mobile communication terminal to the settlement terminal and/or the digital copyright issuing server after the bar code is displayed for a predetermined time.

According another aspect of the present invention, the user identification information is the number or the user name of the mobile communication terminal.

According another aspect of the present invention, a settlement terminal includes an obtaining unit configured to receive preferential identification information of an electronic coupon from a mobile communication terminal and user identification information of the mobile communication terminal; a recognition unit configured to recognize the preferential identification information; a settlement unit configured to perform corresponding preference for a target commodity based on the recognized preferential identification information; and a reporting unit configured to report user identification information of the mobile communication terminal and preferential feedback information corresponding to the electronic coupon to a digital copyright issuing server of the electronic coupon.

According another aspect of the present invention, the preferential feedback information of the electronic coupon includes a preferential price of the target commodity, or a feedback indication value corresponding to the target commodity and presented with the mobile communication terminal.

According another aspect of the present invention, the settlement terminal further includes: a memory unit configured to store an address of the digital copyright issuing server of the electronic coupon corresponding to the preferential identification information of the electronic coupon.

According another aspect of the present invention, the identification information of the coupon carries the address of the digital copyright issuing server of the electronic coupon.

According another aspect of the present invention, the identification information of the coupon is a bar code, and the obtaining unit includes: a reading unit configured to obtain the identification information of the coupon by scanning and recognizing the bar code displayed on the mobile communication terminal; and a receiving unit configured to receive the user identification information of the mobile communication terminal.

Through the mobile communication terminal, the present invention can carry and use the electronic coupons more conveniently.

These and other aspects and features will be clearer with reference to the following descriptions and drawings. The embodiments of the present invention are disclosed in the following description and drawings for the convenience of understanding the ways for implementing the present invention. But it shall be appreciated that the scope of the present invention is not limited by these embodiments, and the present invention covers all changes, improvements and equivalents within the scope of the claims.

Features described and/or illustrated with respect to one embodiment can be used in one or more other embodiments in a same or similar way, and/or combine with or replace features in other embodiments.

To be noted, the term "include/comprise/have" herein refers to existence of feature, component, step and assembly, not excluding existence or addition of one or more other features, components, steps, assemblies or a combination thereof.

Many aspects of the present invention can be understood better with reference to the following drawings. The constituent parts of the drawings are not necessarily drafted in proportion or to scale, but are presented just for illustrating the present invention more clearly. For the convenience of illustrating and describing some parts of the present invention, and promoting the understanding of the embodiments, some parts of the drawings may be enlarged, e.g., enlarging those parts with respect to other parts in an exemplary apparatus practically manufactured according to the present invention. Elements and features described in a drawing or embodiment of the present invention can be combined with elements and features illustrated in one or more other drawings or embodiments. In addition, same or corresponding reference signs are used to represent same or corresponding constituent parts in all the drawings, and they also can be used to represent same or corresponding constituent parts in more than one of the embodiments.

### Brief Description of the Drawings

The included drawings constitute a part of the Specification, for illustrating the embodiments of the present invention and interpreting the present invention together with the text description. The drawings and the following description present some embodiments to provide an understanding of the present invention.
Fig. 1 is a schematic block diagram of a mobile phone according to an embodiment of the present invention;
Fig. 2 is a schematic diagram of an operation interface (or user interface) displaying electronic coupons of the mobile phone according to an embodiment of the present invention;
Fig. 3 is a schematic block diagram of a mobile phone according to another embodiment of the present invention;
Fig. 4 is a schematic diagram of an operation interface (or user interface) displaying electronic coupons of the mobile phone according to another embodiment of the invention;
Fig. 5 is a schematic block diagram of a settlement terminal according to an embodiment of the present invention;
Fig. 6 is a flow chart of a data processing method for the mobile phone according to an embodiment of the present invention; and
Fig. 7 is a flow chart of a data processing method for the mobile phone according to another embodiment of the present invention

### Detailed Description of the Preferred Embodiments

In the present application, the embodiments of the present invention are mainly described by taking a portable electronic apparatus such as mobile phone (e.g., cell phone) as an example. However, it shall be appreciated that the present invention is not limited to the mobile phone, but relates to any appropriate type of electronic apparatus having a function of wireless communication. Interchangeable terms "electronic apparatus" and "electronic device" include portable wireless communication apparatus. The term "portable wireless communication apparatus" (also called as "mobile communication terminal", "portable electronic apparatus" or "portable communication device") includes all apparatuses having the function of wireless communication such as mobile phone, personal digital assistant (PDA), MP4, smart phone and portable communication apparatus.

To be noted, in order to avoid the present invention from being vague due to unnecessary details, the drawings only illustrate device structure and/or processing step(s) closely associated with the solution of the present invention, and other details not necessary for understanding the present invention are omitted.

### Embodiment 1

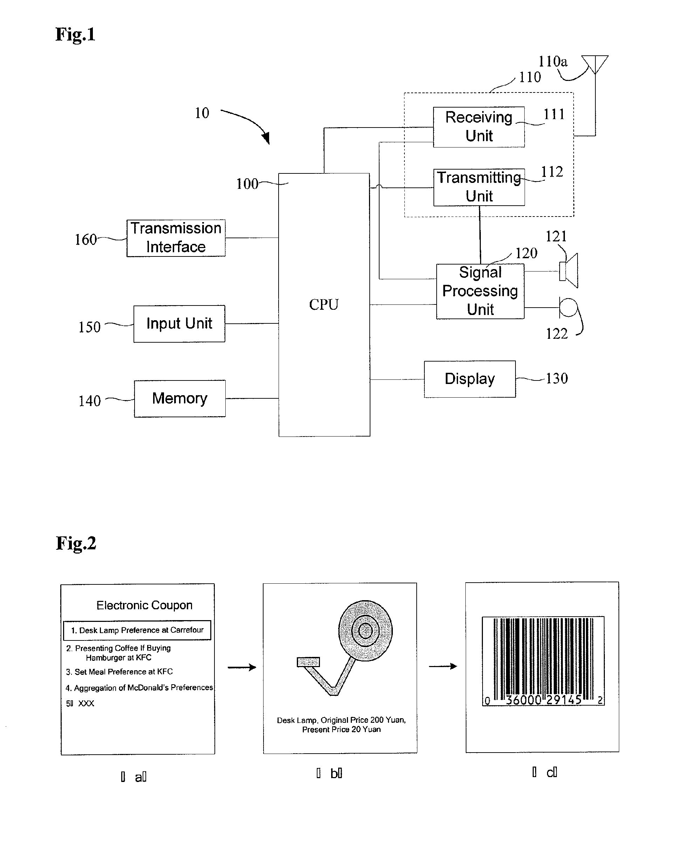

Fig. 1 is a schematic block diagram of a mobile phone 10 according to an embodiment of the present invention. As illustrated in Fig. 1, the mobile phone includes: a central processing unit (CPU, also called as microprocessor or processor) 100, a radio frequency (RF) unit 110, a signal processing unit 120, a display 130, a memory 140, an input unit 150 and a data transmission interface 160.

The RF unit 110 is configured to transmit and receive data via a mobile communication network through an antenna 110a to realize communication with the external device. The mobile communication network for example may be, but is not limited to, GSM, GPRS or 3G mobile communication network, 4G mobile communication network, or transitional networks between respective generations. The RF unit 110 communicates with other devices so as to realize functions of wireless communication of the mobile phone 10, such as voice call, message (short message SM, multimedia message MMS, etc.) transmission and reception and/or Internet access. The RF unit 110 includes at least one receiving unit 111 and at least one transmitting unit 112 for data reception and transmission respectively.

The signal processing unit 120 is configured to decode a voice signal received by the receiving unit 111, convert it into an analog signal and outputs through a speaker 121. In addition, the signal processing unit 120 is further configured to convert the analog signal input from a microphone 122 into a digital signal, perform a voice coding, and transmit through the transmitting unit 112.

The display 130 is configured to display an object such as image and text. The display for example may be, but not limited to, a LCD display.

The input unit 150 is configured to provide inputs, e.g., input signals. The input unit 150 for example may be keypad and/or touch screen that may be operated by a user of the mobile phone 10.

The transmission interface 160 is configured to carry out a data transmission with an external device. The transmission interface for example may be USB interface and/or Infrared Data Association (IrDA) interface.

In order that the user can conveniently use electronic coupons, the receiving unit 111 (hereafter referred to as the first receiving unit) of the mobile phone in the present embodiment is configured to receive electronic coupons from an external electronic device and store the received electronic coupons into the memory 140. The content of the electronic coupon for example may include preferential information of commodity and bar code corresponding to the preferential information. Herein the external electronic device for example may be a server for issuing coupons of the merchant or other electronic devices (e.g., a mobile phone of friend). The first receiving unit 111 for example may download electronic coupons from the server issuing coupons of the merchant by accessing website of the merchant via a mobile communication network, or obtain electronic coupons from the mobile phone of friend by receiving MMS from the mobile phone of friend.

Herein the preferential information of commodity for example may include trade name and concrete, e.g., specific, preferential content, and the preferential information may be in the form of text (e.g., "presenting coffee if buying chicken sandwich", "saving 6 Yuan if buying chicken sandwich"), and/or may be in the form of picture (e.g., a picture having a text of "desk lamp, original price 200 Yuan, present price 20 Yuan" and an image of desk lamp), etc. The bar code corresponding to the preferential information may be one-dimensional or two-dimensional bar code serving as preferential identification information of the commodity, e.g., identifying the preference for commodity. For example, the information indicated by the bar code may be "desk lamp, discounted price 20 Yuan" or "desk lamp, discount 90%", etc. Of course, the information carried by the bar code may further include validity period of the preferential activity, e.g., information indicating "the validity period is from January 1, 2010 to June 1, 2010". The bar code may be displayed on the display for being read (scanned and recognized) by a code bar reader of a settlement terminal such as a cash register.

As an example, the electronic coupon received by the mobile phone for example may include two frames of images, wherein one frame of image is an image of preferential information, and the other frame of image is bar code information, as illustrated in (b) and (c) of Fig. 2, respectively. Herein two frames of images are just given for example, and the present invention is not limited thereto. For example, the electronic coupon received by the mobile phone may include only one frame of image (e.g., the one frame of image may include not only trade name and preferential content, but also bar code corresponding to the preferential information), or three or more frames of images. In the case that the mobile phone includes three or more frames of images, the image may include preferential information and corresponding bar codes of multiple commodities, and the user can orderly display the preferential information and bar codes of respective commodities on the display through the navigation key (e.g., Up, Down, Left or Right key).

In the present embodiment, the user can download multiple pieces of different electronic coupons as required and store them in the memory 140 of the mobile phone carried with him, so as to avoid the trouble of carrying multiple pieces of paper coupons or discount cards, and any loss will not easily occur. In addition, the downloaded multiple pieces of electronic coupons may be stored in different sub-menus under corresponding menu directory (e.g., the directory of "electronic coupon") of the mobile phone, or stored in one sub-menu. For example, two electronic coupons downloaded from the website of KFC, e.g., "set meal preference at KFC" and "presenting coffee if buying hamburger at KFC", may be stored in two different sub-menus under the menu directory of "electronic coupon", while multiple pieces of coupons of McDonald's commodities downloaded from the website of McDonald's may be downloaded into one same sub-menu (e.g., sub-menu of "aggregation of McDonald's preferences").

Fig. 2 schematically illustrates an operation carried out by the user when using the coupon. As illustrated in Fig. 2(a), the user can select appropriate coupon through the operation menu of the mobile phone. When a coupon is selected and the button "Confirm" is pressed, the preferential information of the commodity can be displayed on the display as illustrated in Fig. 2(b), and the bar code corresponding to the preferential information can be further displayed through the navigation key (e.g., Right key) as illustrated in Fig. 2(c). If the user wants to pay for the chosen commodity (desk lamp) on the coupon, he may show the bar code displayed on the display to the cashier. The bar code reader of the settlement terminal reads the bar code (e.g., scans and recognizes the bar code), so that corresponding preference can be performed for the commodity based on the recognized preference for the commodity. For example, when the referential price of the desk lamp is recognized as 20 Yuan, the user will be charged a price of 20 Yuan.

As can be seen from the above description, the electronic coupons can be carried and used more conveniently through the mobile communication terminal such as the mobile phone 10 in the present embodiment.

As described above, the first receiving unit 111 may obtain electronic coupons from the external device through a remote wireless communication network such as GSM, GPRS, or 4G mobile communication network, etc. However, alternatively, the first receiving unit 111 may also be implemented to obtain electronic coupons from an external device through any short-range communication technique, such as Bluetooth, 802.11 (Wi-Fi), Ultra Wideband (WUB) or Zigbee, etc., at that time, the first receiving unit is implemented as a short-range wireless communication module that communicates using techniques such as Blue tooth, WUB or Zigbee, etc. Or alternatively, the first receiving unit may be not arranged in the RF unit, and it is implemented as the data transmission interface 160, e.g., receiving electronic coupons from the external device through the data transmission interface 160.

### Embodiment 2

In the above Embodiment 1, any user can repeatedly use the electronic coupons in the mobile phone, and there is no limitation to the user group using the electronic coupons or the permission including usage times. In order to restrictively allow specific mobile phone users to use the electronic coupons, and appropriately advertise the products by sales promotion while preventing the coupons being excessively used, Digital Rights Management (DRM) is applied to the electronic coupons and used by the mobile phone in the present embodiment.

The DRM technique is a technical tool protecting and managing intellectual properties during the processes of manufacturing, spreading, marketing and using the digitized content (hereinafter also referred to as content object). The DRM Specification of Open Mobile Alliance (OMA) defines that the rights and interests of the content issuer, copyright issuer and service provider of the digitized information under copyright protection are ensured by authenticating the users, specifying the range of rights granted to the users, and normalizing the users' behaviors.

The basic principle of the DRM technique is that firstly, the content provider packs and encrypts the content object provided by itself, and then distributes to the final user. During the process of packing the content object, a Key is generated from a Seek and a KeylD, wherein the Seek is a secret shared between the packing and encrypting authority (e.g., the content provider) and a license authority (also called as digital copyright issuer or digital copyright issuing server), and the KeylD is a global unique identifier. The content provider uses the generated Key to encrypt the content object to be protected, and places the KeylD and the Uniform Resource Locator (URL) of the digital copyright issuer in the head of the encrypted content object. When using the content object, the user can obtain corresponding license (or called as copyright object) from the digital copyright issuer according to the KeylD and URL information in the head of the content object, the license being sent after being authenticated and authorized by the digital copyright issuer, and the license includes the Key required for decrypting the content object and permission information (e.g., allowed usage times, allowed usage period, etc.), so that the user can use the content object. Since the content object to be protected is encrypted, it cannot be played without the authentication and authorization of the digital copyright issuer, even being downloaded by the user, thus the copyright of the content object is strictly protected. Presently, a common DRM encryption and decryption method is to use two keys, e.g., one public key and one private key. The public key is used as an encryption key to encrypt the content object, and the private key is arranged in the copyright object and used as a decryption key to decrypt the content object. In addition, the private key can also prevent the head of the content object from being modified or damaged, so as to avoid the program from being illegally used. Another DRM encryption and decryption method which is known and safer is to use three keys, e.g., the decryption key is divided into two keys, one is used as the digital copyright object and stored at the user end (e.g., the user's mobile phone), the other is stored in the access ticket. When the user wants to use the content object, he shall obtain the key in the access ticket at the same time so as to decrypt the content object. Thus, when one of the decryption keys is transmitted to the user, even if it is stolen, the encrypted content still cannot be decrypted. The above DRM encryption and decryption methods are known techniques, so detailed descriptions of them are omitted herein. To be noted, these DRM encryption and decryption methods and other possible DRM encryption and decryption methods are all adaptive to the present invention.

The DRM Specification of OMA gives a frame model (e.g., framework) in which the content object and the copyright object corresponding thereto are issued separately. The content object is encrypted and can be issued to the user by the content issuer, but the user shall obtain the copyright object prior to getting permission to the content, instead of directly using the content object. According to the frame in which the content object and the copyright object are issued separately, the user can connect with the copyright issuer through the URL information included in the text head of the content object, and obtain the copyright object corresponding to the content object, which is issued by the copyright issuer based on the copyright object acquisition protocol, so as to use the content object. According to the DRM Specification of OMA, when the content under digital copyright protection is issued based on the mobile terminal, the content object and copyright object can be bonded together to be issued or issued separately.

In the present embodiment, the content object is the electronic coupon under digital copyright protection, and the copyright object is called as digital copyright file in the following description.

In order to execute the DRM Specification of OMA, the mobile phone is provided with a DRM agent for performing various functions specified by the DRM of OMA, e.g., performing the usage limitation to the content object according to the copyright object, and forbidding an illegal read of the content object.

In the present embodiment, the mobile phone not only stores the electronic coupon, but also downloads a digital copyright file corresponding to the electronic coupon from a digital copyright issuing server. The electronic coupon and its digital copyright file can be downloaded through the mobile communication network in a bonded form, e.g., bonded electronic coupon and its digital copyright file are downloaded from a server of the website of a certain fast food restaurant. Also, the electronic coupon and its digital copyright file can be downloaded separately, thus the electronic coupon can be distributed among mobile phones through the mobile communication network, Bluetooth, etc., and a user receiving the electronic coupon can download the digital copyright file from a digital copyright issuing server of the electronic coupon. As a result, the mobile phone having downloaded the digital copyright file can use the electronic coupon based on the digital copyright permission provided by the downloaded digital copyright file.

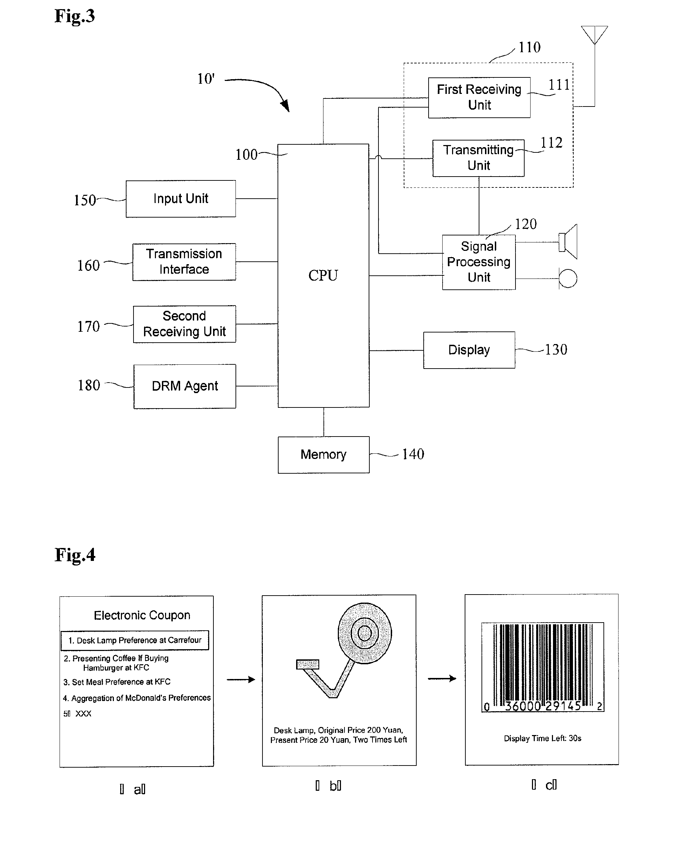

Fig. 3 is a schematic block diagram of a mobile phone 10' according to the present embodiment. As illustrated in Fig. 3, the mobile phone includes a second receiving unit 170 and a DRM agent 180 in addition to a CPU 100, a first receiving unit 111, a transmitting unit 112, a signal processing unit 120, a display 130, a memory unit 140, an input unit 150 and a data transmission interface 160. The components in the present embodiment having reference signs same as those in Embodiment 1 may have functions same as those in Embodiment 1. In addition, in the mobile phone according to Embodiment 2:

The first receiving unit 111 is configured to receive an electronic coupon under digital copyright protection from an external electronic device, and store it into the memory unit 140. The content of the electronic coupon for example may include preferential information of a commodity, and a bar code corresponding thereto and serving as preferential identification information of the commodity. Herein the external electronic device for example may be a server for issuing coupons of the merchant or other electronic devices (e.g., a mobile phone of friend). Since the electronic coupon is under digital copyright protection, if there is no corresponding digital copyright file, the content of the electronic coupon will not be displayed, or at least the bar code in the electronic coupon cannot be displayed. If the bar code is not displayed, the settlement terminal (e.g., cash register) cannot read the bar code, and the preferential measures for corresponding commodity cannot be carried out.

The second receiving unit 170 is configured to receive a digital copyright file corresponding to the electronic coupon from the digital copyright issuing server, and store the digital copyright file into the memory unit 140. According to the DRM Specification of OMA, the electronic coupon and corresponding digital copyright file can be bonded together to be issued or issued separately, and if they are bonded together, the first receiving unit 111 can receive the bonded electronic coupon and corresponding digital copyright file from the digital copyright issuing server of the electronic coupon via the mobile communication network. Thus in that case, the second receiving unit 170 and the first receiving unit 111 are the same unit. If the electronic coupon and corresponding digital copyright file are issued separately, the second receiving unit 170 only receives the digital copyright file corresponding to the electronic coupon from the digital copyright issuing server via the mobile communication network.

In the present embodiment, the DRM agent 180 is configured to perform the functions specified by the DRM of OMA, e.g., performing the usage limitation to the electronic coupon according to the digital copyright file, and forbidding an illegal read of the electronic coupon. More particularly, the DRM agent 180 can provide the bar code to the settlement terminal based on the digital copyright permission, for scan and recognition by the settlement terminal. In addition, the DRM agent 180 can also update the digital copyright permission when it changes.

Herein, providing the bar code to the settlement terminal based on the digital copyright permission means controlling the display 130 to display the bar code to the settlement terminal based on digital copyright permission of the electronic coupon, for scan and recognition by the settlement terminal.

As the digital copyright file is available, when the electronic coupon is used, the display 130 can display not only preferential information of commodity on the electronic coupon, but also the bar code based on the digital copyright permission of the electronic coupon provided by the digital copyright file under the control of the DRM agent 180, for scan and recognition by the settlement terminal. Furthermore, the display 130 can also display the digital copyright permission on the screen.

The preferential information of commodity for example may include, but not limited to, trade name, coupon code and concrete preferential content, and the preferential information may be in the form of text (e.g., "presenting coffee if buying chicken sandwich", "saving 6 Yuan if buying chicken sandwich"), and/or may be in the form of picture (e.g., a picture having a text of "desk lamp, original price 200 Yuan, present price 20 Yuan" and an image of desk lamp), etc. The bar code corresponding to the preferential information may be one-dimensional or two-dimensional bar code serving as preferential identification information of the commodity, e.g., identifying the preference for commodity. For example, the information indicated by the bar code may be "desk lamp, discounted price 20 Yuan" or "desk lamp, discount 90%", etc.

As an example, the coupon received by the mobile phone for example may include two frames of images, wherein one frame of image is an image of preferential information, and the other frame of image is bar code information, but the present invention is not limited thereto. For example, the electronic coupon received by the mobile phone may include only one frame of image (e.g., the one frame of image may include not only trade name, coupon code, and preferential content, but also bar code corresponding to the preferential information), or three or more frames of images. In the case that the mobile phone includes three or more frames of images, the image may include preferential information and corresponding bar codes of multiple commodities, and the user can orderly display the preferential information and bar codes of respective commodities on the display through the navigation keys (e.g., Up, Down, Left or Right key).

In the present embodiment, the user can download multiple pieces of different electronic coupons upon demand and store them in the memory 140 of the mobile phone carried with him, so as to avoid the trouble of carrying multiple pieces of paper coupons or discount cards, and any loss will not easily occur. In addition, the downloaded multiple pieces of electronic coupons may be stored in different sub-menus under corresponding menu directory (e.g., the directory of "electronic coupon") of the mobile phone, or stored in one sub-menu. For example, two electronic coupons downloaded from the website of KFC, e.g., "set meal preference at KFC" and "presenting coffee if buying hamburger at KFC", may be stored in two different sub-menus under the menu directory of "electronic coupon", while multiple pieces of coupons of McDonald's commodities downloaded from the website of McDonald's may be downloaded into one same sub-menu (e.g., sub-menu of "aggregation of McDonald's preferences").

Still taking the preferential promotion of the desk lamp as an example, Fig. 4 schematically illustrates an operation carried out by the user when using the desk lamp coupon of certain merchant. As illustrated in Fig. 4(a), the user can select appropriate coupon through the operation menu of the mobile phone. After a coupon is selected and the button "Confirm" is pressed, the preferential information of the commodity will be displayed on the display as illustrated in Fig. 4(b) if the digital copyright file corresponding to the electronic coupon is downloaded in advance, further, permission information of the coupon will be also displayed, such as validity period and/or usage times left (Fig. 4(b) shows "two times left"). If the user wants to pay for the chosen commodity (desk lamp) on the coupon, he may further show the bar code displayed on the display to the cashier as illustrated in Fig. 4(c) through the navigation key (e.g., the Right key). Preferably, if the digital copyright file defines the maximum duration (e.g., in seconds, such as, 30s, 45s or 60s) for displaying the bar code each time, the time left (e.g., 30s, 20s or 5s) for displaying the bar code will be displayed while the bar code is displayed. The bar code reader of the settlement terminal may scan and recognize the bar code within the specified maximum duration so as to read the bar code. After reading (e.g., scanning and recognizing) the bar code, the settlement terminal performs corresponding preference for the commodity based on the recognized preference for the commodity. If the preferential price of the desk lamp is recognized as 20 Yuan, the user will be charged a price of 20 Yuan. If the defined duration for displaying the bar code elapses, the display interface automatically returns to Fig. 4(b), and the DRM agent 180 reduces the usage times left by 1, at that time, Fig. 4(b) displays "1 time left".

If the user of the mobile phone has lost the permission of the electronic coupon, e.g., the validity period is exceeded or the usage times left is 0, such information can be displayed in Fig. 4(b). At that time, if the user attempts to display the bar code through the navigation key, the bar code will not be displayed, e.g., the user is no longer allowed to use the electronic coupon. Now the display may display prompt information indicating that the electronic coupon cannot be used, or information notifying the user how to obtain a permission of the coupon again.

As can be seen from the above description, in the present embodiment, the electronic coupon not only can be carried and used more conveniently through the mobile communication terminal such as the mobile phone, but also is prevented from being used excessively or more than the permitted number of uses.

Furthermore, in order that the settlement terminal can conveniently report the conditions of using the electronic coupons by mobile phone to the digital copyright issuing server of the electronic coupon, or count the conditions of using various electronic coupons by the mobile phones users, so as to feed back bonus points to the mobile phones users according to such usage conditions, the DRM agent 180 in the present embodiment is further configured to transmit the user identification information of the mobile phone to the settlement terminal after the display displays the bar code for a predetermined time. Alternatively, the DRM agent 180 may be further configured to directly transmit the user identification information of the mobile phone to the digital copyright issuing server after the display displays the bar code for a predetermined time, and at the same time, may also carry the identification information or other information (e.g., trade name or code of the electronic coupon) of the electronic coupon.

Herein the user identification information for example may be, but not limited to, the number or the user name of the mobile phone, etc.

The predetermined time may be the maximum duration (e.g., 30s, 45s or 60s) for displaying the bar code each time as specified in the digital copyright file, because when the bar code is displayed for the maximum duration, the DRM agent 180 will consider that the user uses the electronic coupon for one time.

Thus, in the present embodiment, when the settlement terminal reads the bar code to carry out a settlement according to the bar code, it may further receive the user identification information of the mobile phone. After receiving the user identification information of the mobile phone, the settlement terminal can report the conditions of using the electronic coupons by the mobile phone users to the digital copyright issuing server of the electronic coupon, and the reported message may carry the identification information of the electronic coupon and the identification information of the mobile phone user. In addition, the settlement terminal can locally store the conditions of using the electronic coupons by the mobile phone users, so as to feed back bonus points or gifts, etc. to the mobile phone users according to the usage conditions of the electronic coupon of the mobile phone users within a certain period (e.g., 1 year).

After receiving the conditions of using the electronic coupons by the mobile phone users, the digital copyright issuing server can count the usage conditions of respective electronic coupons, so as to establish a more appropriate marketing policy for the commodity according to the usage conditions, or analyze different demands of respective mobile phone users with respect to the usage degrees of the electronic coupons of respective mobile phone users, so as to actively launch different products or services to different users, and hence carry out marketing promotion more advantageously.

### Embodiment 3

The present embodiment is a modification of Embodiment 2. The preferential identification information of the electronic coupon is the bar code in Embodiment 2, but in the present embodiment, the preferential identification information may be any other identification information for identifying the preference for commodity, in addition to the bar code. For example, the preferential identification information may be present price code of commodity, descriptive text or coding of preferential commodity, or preference list of commodities.

In the present embodiment, the first receiving unit 111 is configured to receive an electronic coupon under digital copyright protection from an external electronic device, and store it into a memory of the mobile phone.

The second receiving unit 170 may be same as or different from the first receiving unit 111, and configured to receive a digital copyright file corresponding to the electronic coupon from the digital copyright issuing server, and store it into the memory.

The display 130 is configured to display preferential information of the electronic coupon and/or digital copyright permission corresponding to the digital copyright file.

The DRM agent 180 is configured to send the preferential identification information of the electronic coupon to the settlement terminal based on the digital copyright permission, for a recognition carried out by the settlement terminal. Preferably, the DRM agent 180 may provide preferential identification information to the settlement terminal through any short-range wireless communication module such as Bluetooth, Ultra Wideband (WUB), Zigbee or IrDA. The preferential identification information may be any information indicating the preference for commodity, and may be transmitted to the settlement terminal in a form of message (including short message (SM), multimedia message (MM), or message consistent with the adopted short-range wireless communication protocol) or data file. The settlement terminal receives the preferential identification information, recognizes the preference for commodity, and performs corresponding preference. In addition, the identification information of the coupon may also carry an address of the digital copyright issuing server of the electronic coupon.

Furthermore, in order that the settlement terminal can conveniently report the conditions of using the electronic coupons by mobile phone to the digital copyright issuing server of the electronic coupon, or count the conditions of using various electronic coupons by the mobile phones users, so as to feed back bonus points to the mobile phones users according to such usage conditions, the DRM agent 180 in the present embodiment is further configured to transmit the user identification information of the mobile phone to the settlement terminal after or while transmitting the preferential identification information to the settlement terminal. Alternatively, the DRM agent 180 may be further configured to directly transmit the user identification information of the mobile phone to the digital copyright issuing server after or while transmitting the preferential identification information to the settlement terminal, and at the same time, may carry information (e.g., trade name or code of the electronic coupon) of the electronic coupon. The user identification information for example may be the number or the user name of the mobile phone. Preferably, the DRM agent 180 may transmit user identification information of the mobile phone to the settlement terminal through any short-range wireless communication module such as Bluetooth, Ultra Wideband (WUB), Zigbee or IrDA. If the user identification information and preferential identification information of the mobile phone is transmitted simultaneously, the data transmitted by the DRM agent 180 to the settlement terminal will carry the user identification information and preferential identification information simultaneously.

Thus, in the present embodiment, after settling the preferential commodity and receiving the user identification information of the mobile phone, the settlement terminal can report the conditions of using the electronic coupons by the mobile phone users to the digital copyright issuing server of the electronic coupon, and the reported message may carry the identification information of the electronic coupon and the identification information of the mobile phone user.

In addition, the settlement terminal can locally store the conditions of using the electronic coupons by the mobile phone users, so as to feed back bonus points or gifts, etc. to the mobile phone users according to the usage conditions of the electronic coupon of the mobile phone users within a certain period (e.g., 1 year).

After receiving the conditions of using the electronic coupons by the mobile phone users, the digital copyright issuing server can count the usage conditions of respective electronic coupons, so as to establish a more appropriate marketing policy for the commodity according to the usage conditions, or analyze different demands of respective mobile phone users with respect to the usage degrees of the electronic coupons of respective mobile phone users, so as to actively launch different products or services to different users, and hence carry out marketing promotion more advantageously.

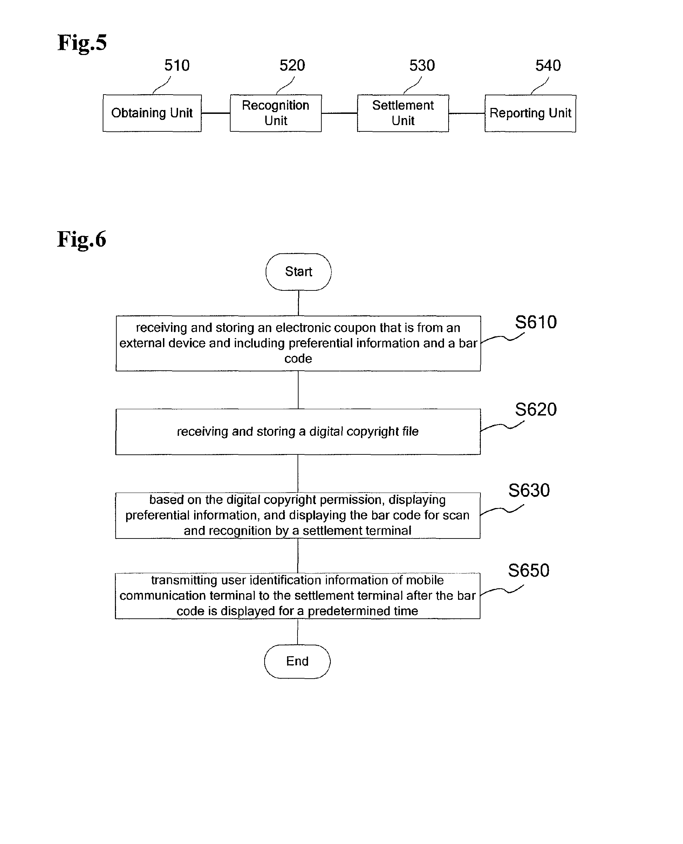

Fig. 5 is a schematic block diagram of a settlement terminal according to the present embodiment. As illustrated in Fig. 5, the settlement terminal includes: an obtaining unit 510, a recognition unit 520, a settlement unit 530 and a reporting unit 540, in which:
The obtaining unit 510 is configured to receive preferential identification information of electronic coupon from a mobile phone, e.g., mobile phone 10 or 10' or other mobile phone, and user identification information of the mobile phone. If the identification information of the coupon is a bar code, then the obtaining unit 510 includes: a reading unit (not shown) configured to obtain the identification information of the coupon by scanning and recognizing the bar code displayed on the mobile phone; and a receiving unit (not shown) configured to receive the user identification information of the mobile phone.

The recognition unit 520 is configured to recognize the preferential identification information.

The settlement unit 530 is configured to perform corresponding preference for a target commodity based on the recognized preferential identification information.

The reporting unit 540 is configured to report user identification information of the mobile phone and preferential feedback information corresponding to the electronic coupon to the digital copyright issuing server of the electronic coupon. The address of the digital copyright issuing server can be obtained through an interaction with the mobile phone, or obtained from the preferential identification information, or stored in the memory of the settlement terminal in advance. The preferential feedback information of the electronic coupon for example may include one or more of the following information: preferential price of the target commodity, preferential identification information, or feedback indication value (e.g., bonus points) corresponding to the target commodity and presented with the mobile phone.

### Embodiment 4

The present embodiment provides a data processing method for mobile communication terminal, as illustrated in Fig. 6, the method includes:
Step S61 0: a mobile phone receives and stores an electronic coupon that is from an external device and at least includes preferential information of commodity and a bar code corresponding to the preferential information.

The external device for example may be a server for issuing coupons of the merchant or other electronic devices (e.g., a mobile phone of friend). The electronic coupon may be received through a mobile communication network, a short-range wireless communication network or a transmission interface.

Step S630: the mobile phone displays the preferential information of the electronic coupon on a display, and displays the bar code for scan and recognition by a settlement terminal. After recognizing the bar code, the settlement terminal can perform corresponding preference for the commodity based on the recognized preference for the commodity.

With this method, a mobile communication terminal such as the mobile phone can carry and use the electronic coupon more conveniently, and reduce the loss.

In case the electronic coupon is a coupon under digital copyright protection, the method further includes a step S620, receiving and storing a digital copyright file that is corresponding to the electronic coupon and from the digital copyright issuing server. For example, the digital copyright file can be received through the mobile communication network.

At that time, step S630 displays the bar code based on digital copyright permission provided by the digital copyright file, for a scan and recognition by the settlement terminal. In addition, the digital copyright permission can also be displayed the on the display of the mobile phone.

With respect to the electronic coupon under digital copyright protection, the method according to the present embodiment can prevent the electronic coupon from being used excessively or more than the permitted number of uses.

Furthermore, in order that the settlement terminal can conveniently report the conditions of using the electronic coupons to the digital copyright issuing server of the electronic coupon, or count the conditions of using various electronic coupons by the mobile phones users, the method according to the present embodiment may further include: step S650 that transmits user identification information of the mobile phone to the settlement terminal after the bar code is displayed for a predetermined time. The user identification information for example may be the number or the user name of the mobile phone.

Thus, the settlement terminal can locally store the conditions of using the electronic coupons by the mobile phone users, so as to feed back bonus points or gifts, etc. to the mobile phone users according to the usage conditions of the electronic coupon of the mobile phone users within a certain period (e.g., 1 year).

After receiving the conditions of using the electronic coupons by the mobile phone users, the digital copyright issuing server can count the usage conditions of respective electronic coupons, so as to establish a more appropriate marketing policy for the commodity according to the usage conditions, or analyze different demands of respective mobile phone users with respect to the usage degrees of the electronic coupons of respective mobile phone users, so as to actively launch different products or services to different users, and hence carry out marketing promotion more advantageously.

Alternatively, the step S650 may also be implemented such that the mobile phone directly transmits the user identification information of the mobile phone to the digital copyright issuing server.

### Embodiment 5

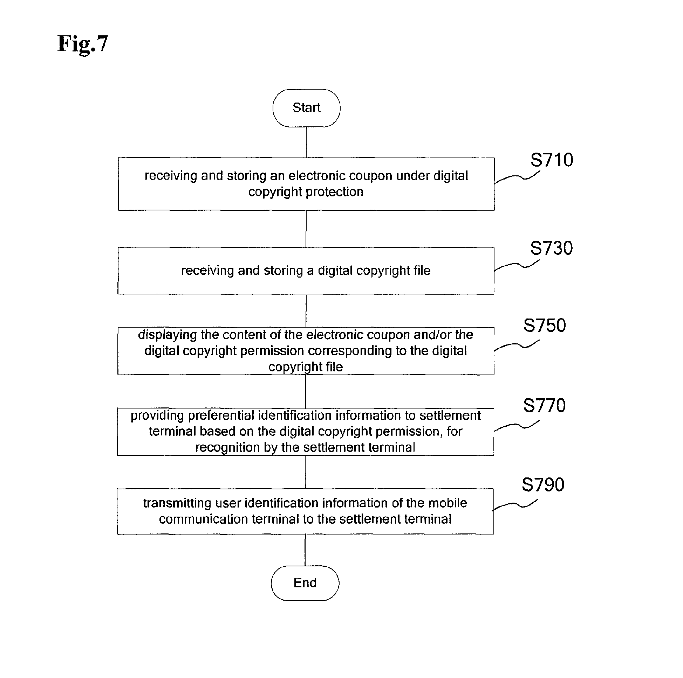

The present embodiment provides another data processing method for mobile communication terminal, as illustrated in Fig. 7, the method includes:
Step S71 0: receiving and storing an electronic coupon that is under digital copyright protection and from an external device.
Step S730: receiving and storing a digital copyright file that is corresponding to the electronic coupon and from a digital copyright issuing server.

When the electronic coupon and corresponding digital copyright file are bonded together, the steps S71 0 and S730 are completed simultaneously. At that time, the mobile phone can receive the electronic coupon and corresponding digital copyright file which are bonded together from the digital copyright issuing server of the electronic coupon.

Step S750: displaying the content of the electronic coupon and/or the digital copyright permission corresponding to the digital copyright file.

Step S770: providing preferential identification information of the electronic coupon to the settlement terminal based on the digital copyright permission, for a recognition carried out by the settlement terminal. After recognizing the preference for the commodity, the settlement terminal can perform corresponding preference for the commodity based on the recognized preference for the commodity.

For example, the preferential identification information may be transmitted to the settlement terminal through a short-range communication unit. The preferential identification information may be the bar code or any other identification information for identifying preference for commodity. For example, the preferential identification information may be present price code of commodity, descriptive text or coding of preferential commodity, or preference list of commodity.

Furthermore, in order that the settlement terminal can conveniently report the conditions of using the electronic coupons to the digital copyright issuing server of the electronic coupon, or count the conditions of using various electronic coupons by the mobile phones users, the method according to the present embodiment may further include:
Step S790: transmitting user identification information of the mobile phone to the settlement terminal. The user identification information is the number or the user name of the mobile phone.

For example, the user identification information may be transmitted to the settlement terminal through a short-range communication unit.

Alternatively, Step S790 may also be implemented such that the mobile phone directly transmits the user identification information of the mobile phone to the digital copyright issuing server.

In the present embodiment, the preferential identification information of the electronic coupon and the user identification information can be transmitted together, in such case, steps S770 and S790 are completed simultaneously.

Thus, the settlement terminal can locally store the conditions of using the electronic coupons by the mobile phone users, so as to feed back bonus points or gifts, etc. to the mobile phone users according to the usage conditions of the electronic coupon of the mobile phone users within a certain period (e.g., 1 year).

After receiving the conditions of using the electronic coupons by the mobile phone users, the digital copyright issuing server can count the usage conditions of respective electronic coupons, so as to establish a more appropriate marketing policy for the commodity according to the usage conditions, or analyze different demands of respective mobile phone users with respect to the usage degrees of the electronic coupons of respective mobile phone users, so as to actively launch different products or services to different users, and hence carry out marketing promotion more advantageously.

It shall be appreciated that in the present invention, features described and/or illustrated with respect to one embodiment can be used in one or more other embodiments in the same or similar way, can be combined with features in other embodiments, or can replace features in other embodiments.

It will be appreciated that portions of the present invention can be implemented in hardware, software, firmware, or a combination thereof. In the described embodiment(s), a number of the steps or methods may be implemented in software or firmware that is stored in a memory and that is executed by a suitable instruction execution system. If implemented in hardware, for example, as in an alternative embodiment, implementation may be with any or a combination of the following technologies, which are all well known in the art: discrete logic circuit(s) having logic gates for implementing logic functions upon data signals, application specific integrated circuit(s) (ASIC) having appropriate combinational logic gates, programmable gate array(s) (PGA), field programmable gate array(s) (FPGA), etc.

Any process or method descriptions or blocks in flow charts or otherwise described herein may be understood as representing modules, segments, or portions of code which include one or more executable instructions for implementing specific logical functions or steps in the process, and alternate implementations are included within the scope of the preferred embodiment of the present invention in which functions may be executed out of order from that shown or discussed, including substantially concurrently or in reverse order, depending on the functionality involved, as would be understood by those reasonably skilled in the art of the present invention.

The logic and/or steps represented in the flow diagrams or otherwise described herein, for example, may be considered an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). An example of such memories may be non-transitory memories or media, and so on. Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

The above description and accompanying drawings depict the various features of the invention. It will be appreciated that the appropriate computer code could be prepared by a person who has ordinary skill in the art to carry out the various steps and procedures described above and illustrated in the drawings. It also will be appreciated that the various terminals, computers, servers, networks and the like described above may be virtually any type and that the computer code may be prepared to carry out the invention using such apparatus in accordance with the disclosure hereof.

Specific embodiments of an invention are disclosed herein. One of ordinary skill in the art will readily recognize that the invention may have other applications in other environments. In fact, many embodiments and implementations are possible. The following claims are in no way intended to limit the scope of the present invention to the specific embodiments described above. In addition, any recitation of "means for/ means configured to " is intended to evoke a means-plus-function reading of an element and a claim, whereas, any elements that do not specifically use the recitation "means for", are not intended to be read as means-plus-function elements, even if the claim otherwise includes the word "means".

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, apparatus, compositions, etc.), the terms (including a reference to a "means") used to describe such elements are intended to correspond, unless otherwise indicated, to any element which performs the specified function of the described element (e.g., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A mobile communication terminal (10'), comprising:
a first receiving unit (111) configured to receive an electronic coupon under digital copyright protection from an external device and store the electronic coupon into a memory unit (140) of the mobile communication terminal (10');
a second receiving unit (170) same as or different from the first receiving unit (111), and configured to receive a digital copyright file corresponding to the electronic coupon from a digital copyright issuing server, and store the digital copyright file into the memory unit (140);
a display unit (130) configured to display preferential information of the electronic coupon and/or a digital copyright permission corresponding to the digital copyright file; and
a Digital Rights Management (DRM) agent (180) configured to provide preferential identification information of the electronic coupon to a settlement terminal based on the digital copyright permission, for recognition by the settlement terminal.

2. The mobile communication terminal (10') according to claim 1, wherein the DRM agent (180) is further configured to transmit user identification information of the mobile communication terminal (10') to the settlement terminal and/or the digital copyright issuing server.

3. The mobile communication terminal (10') according to claim 2, wherein the user identification information is the number or the user name of the mobile communication terminal (10'), and wherein the DRM agent (180) transmits data comprising the preferential identification information and the user identification information to the settlement terminal based on the digital copyright permission through a short-range communication unit.

4. The mobile communication terminal (10') according to any one of claims 1-3, wherein the preferential identification information of the electronic coupon provided by the DRM agent (10') to the settlement terminal is a bar code.

5. The mobile communication terminal (10') according to claim 4, wherein the DRM agent (180) is further configured to transmit user identification information of the mobile communication terminal (10') to the settlement terminal and/or the digital copyright issuing server after the display unit (130) displays the bar code for a predetermined time.

6. A data processing method for mobile communication terminal (10'), comprising:
receiving (S710) and storing an electronic coupon that is under digital copyright protection and from an external device;
receiving (S730) and storing a digital copyright file that is corresponding to the electronic coupon and from a digital copyright issuing server;
displaying (S750) preferential information of the electronic coupon and/or a digital copyright permission corresponding to the digital copyright file; and
providing (S770) preferential identification information of the electronic coupon to a settlement terminal based on the digital copyright permission, for recognition by the settlement terminal.

7. The method according to claim 6, further comprising: transmitting (S790) user identification information of the mobile communication terminal (10') to the settlement terminal and/or the digital copyright issuing server.

8. The method according to claim 7, wherein the user identification information is the number or the user name of the mobile communication terminal.

9. The method according to any one of claims 6-8, wherein providing the preferential identification information of the electronic coupon to the settlement terminal comprises: transmitting the preferential identification information to the settlement terminal through a short-range communication unit; and
transmitting the user identification information of the mobile communication terminal to the settlement terminal comprises: transmitting the user identification information to the settlement terminal through the short-range communication unit.

10. The method according to any one of claims 6-9, wherein the preferential identification information of the electronic coupon provided to the settlement terminal is a bar code.

11. The method according to claim 10, further comprising: transmitting user identification information of the mobile communication terminal (10') to the settlement terminal and/or the digital copyright issuing server after the bar code is displayed for a predetermined time.

12. A settlement terminal, comprising:
an obtaining unit (510) configured to receive preferential identification information of an electronic coupon from a mobile communication terminal and user identification information of the mobile communication terminal;
a recognition unit (520) configured to recognize the preferential identification information;
a settlement unit (530) configured to perform corresponding preference for a target commodity based on the recognized preferential identification information; and
a reporting unit (540) configured to report user identification information of the mobile communication terminal (10') and preferential feedback information corresponding to the electronic coupon to a digital copyright issuing server of the electronic coupon.

13. The settlement terminal according to claim 12, wherein the preferential feedback information of the electronic coupon comprises a preferential price of the target commodity, or a feedback indication value corresponding to the target commodity and presented with the mobile communication terminal.

14. The settlement terminal according to either one of claims 12 or 13, wherein the settlement terminal further comprises: a memory unit (140) configured to store an address of the digital copyright issuing server of the electronic coupon corresponding to the preferential identification information of the electronic coupon.

15. The settlement terminal according to any one of claims 12-14, wherein the identification information of the coupon is a bar code, and the obtaining unit comprising:
a reading unit configured to obtain the identification information of the coupon by scanning and recognizing the bar code displayed on the mobile communication terminal (10'); and
a receiving unit configured to receive the user identification information of the mobile communication terminal (10').
